(19) **Europäisches Patentamt / European Patent Office / Office européen des brevets**

(11) **EP 2 367 047 B1**

(12) **EUROPEAN PATENT SPECIFICATION**

(45) Date of publication and mention
of the grant of the patent:
**21.08.2013 Bulletin 2013/34**

(51) Int Cl.:
***G02B 27/28*** *(2006.01)*      ***G02B 5/02*** *(2006.01)*

(21) Application number: **10163584.5**

(22) Date of filing: **21.05.2010**

(54) **Linearly polarized light converter**

Umwandler von linear polarisiertem Licht

Convertisseur de lumière linéairement polarisé

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **05.03.2010 US 718265**

(43) Date of publication of application:
**21.09.2011 Bulletin 2011/38**

(73) Proprietors:
• **Lite-On Technology Corporation Taiwan (TW)**
• **Tsai, Chang-Ching Taipei City 11085 (TW)**

(72) Inventor: **Tsai, Chang-Ching Taipei City 11085 (TW)**

(74) Representative: **Stöckeler, Ferdinand et al Schoppe, Zimmermann, Stöckeler & Zinkler Patentanwälte Postfach 246 82043 Pullach bei München (DE)**

(56) References cited:
**WO-A1-94/11776**     **WO-A1-2004/005979**
**WO-A1-2008/042169**     **CH-A5- 644 457**
**GB-A- 2 066 545**     **US-A- 3 631 288**
**US-A- 6 056 614**     **US-A1- 2009 040 608**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

This invention relates to a linearly polarized light converter, more particularly to a linearly polarized light converter for a micro-liquid-crystal projector.

To accommodate the progress and development of science and technology, industries relating to the field of optoelectronics technology need to promote the polarization efficiency of a backlight module to satisfy the demand of high contrast ratio of the micro-liquid-crystal projection technology [that is, liquid crystal on silicon (LCOS)].

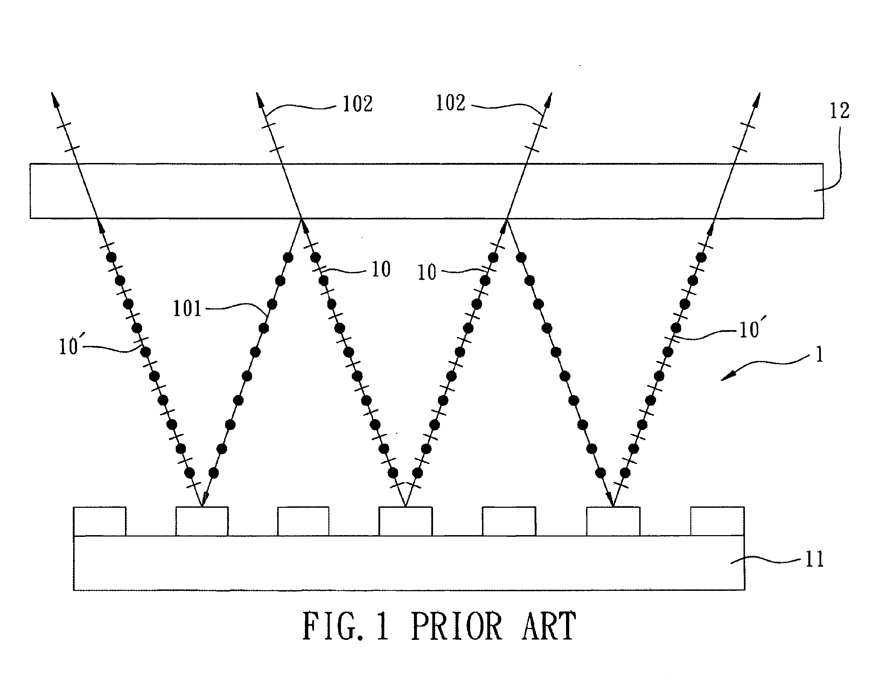

Referring to Fig. 1, a polarization converter 1, as disclosed in U.S. Publication No. 2009/0040608A1, includes a metallic diffraction grating 11 having protrusions and recesses arranged alternatingly, and a polarization beam splitter (PBS) 12 spaced apart from the metallic diffraction grating 11.

In the field of micro-liquid-crystal projection technology, the polarization converter 1 can be used to increase the output of linearly polarized light, which in turn can be used to promote the energy efficiency of the micro-liquid-crystal projector. Generally, unpolarized waves generated by a backlight module of a micro-liquid-crystal projector are mainly made up of random polarized light waves. The aforesaid linearly polarized light refers to light waves having a polarization direction that is fixed along a line, such as transverse magnetic waves (TM) or transverse electric waves (TE).

With reference to Fig. 1, it is worth mentioning that when an unpolarized light wave 10 contacts the polarization beam splitter 12, one of the TM and TE waves is permitted to pass through the polarization beam splitter 12, while the other one of the TM and TE waves is reflected. From the aforesaid description, it is apparent that if the total light energy produced by the backlight module is 100%, 50% of the energy is lost during the polarization conversion. Thus, the function of the metallic diffraction grating 11 on the polarization converter 1 is to convert the reflected linearly polarized light (for example, the TE wave) into an elliptically polarized light wave 10' [which includes a combination of a linearly polarized light (TE wave) 101 and a linearly polarized light (TM wave) 102]. The metallic diffraction grating 11 reflects the elliptically polarized light wave 10' back onto the polarized beam splitter 12. The linearly polarized light (TM wave) 102 is transmitted through the polarization beam splitter 12. Through such polarization recycling, the polarization conversion efficiency of the polarization converter 1 is promoted, and the energy conservation requirements of the micro-liquid-crystal projection technology are satisfied.

Since the metallic diffraction grating 11 has the protrusions and the recesses arranged in an alternating manner, for a cylindrical magnetic wave produced by a cold-cathode fluorescent lamp (CCFL), the polarization conversion efficiency of linearly polarized light is affected by the azimuth arrangement of the metallic diffraction grating 11. In other words, the grating vector of the metallic diffraction grating 11 and the incident plane of the cylindrical magnetic wave must have an included angle of about 45° so as to ensure high polarization conversion efficiency. In this regard, the cylindrical magnetic wave has only one incident plane. However, with regards to magnetic waves produced by other non-cylindrical light sources, there is not only one incident plane, so that it is not possible to adjust the azimuth of the grating vector so as to obtain good polarization conversion efficiency. Hence, with regards to the polarization converter 1 disclosed in U.S. Publication No. 2009/0040608A1, because the polarization converter 1 uses the metallic diffraction grating 11, it is suitable for use with a CCFL as the backlight source.

From the aforesaid description, it is apparent that in order to promote polarization efficiency, such a technical field involves many accurate and alternating photolithographic and etching steps to make the metallic diffraction grating 11. Not only is the consumption of time and equipment costs large, but due to the outer appearance and structure of the metallic diffraction grating 11, the metallic diffraction grating 11 is limited to cooperating with a CCFL as the light source of a backlight module. Hence, there is need in this field to reduce the production costs of the polarized converter and to allow for different types of non-cylindrical light sources to be used therewith.

Therefore, the object of the present invention is to provide a linearly polarized light converter that is capable of overcoming the aforementioned drawbacks of the prior art.

According to this invention, a linearly polarized light converter uses a polarization recycling mechanism for separating a first linearly polarized wave of an unpolarized wave that includes the first linearly polarized wave and a second linearly polarized wave orthogonal with the first linearly polarized wavea light source arranged to produce the unpolarized wave. The linearly polarized light converter comprises a polarized beam splitter and a metallic reflector. The polarized beam splitter is disposed on a first side of the light source for receiving the unpolarized wave, transmitting the first linearly polarized wave therethrough, and reflecting the second linearly polarized wave. The metallic reflector is disposed on a second side of the light source that is opposite to the first side, and includes a metal layer and a plurality of metal particles formed on a surface of said metal layer and distributed over the metal layer to cooperatively define a rough surface. The rough surface converts the reflected second linearly polarized wave into an elliptical polarized wave, and reflects the elliptical polarized wave therefrom.

The efficacy of the present invention resides in providing a linearly polarized converter that has low production costs and that is suitable for use with non-cylindrical light sources, for example, a light emitting diode (LED) backlight light source that produces a spherical electromagnetic wave.

Other features and advantages of the present invention will become apparent in the following detailed description of the preferred embodiment of the invention, with reference to the accompanying drawings, in which:

Fig. 1 is a schematic view of a polarization converter disclosed in U.S. Publication No. 2009/0040608A1;
Fig. 2 is a schematic view of a polarization converter according to the preferred embodiment of this invention;
Fig. 3 is a fragmentary enlarged schematic view of the preferred embodiment; and
Fig. 4 is a 3D chart of power efficiencies of the polarization converter of the present invention at different wavelengths and incident angles.

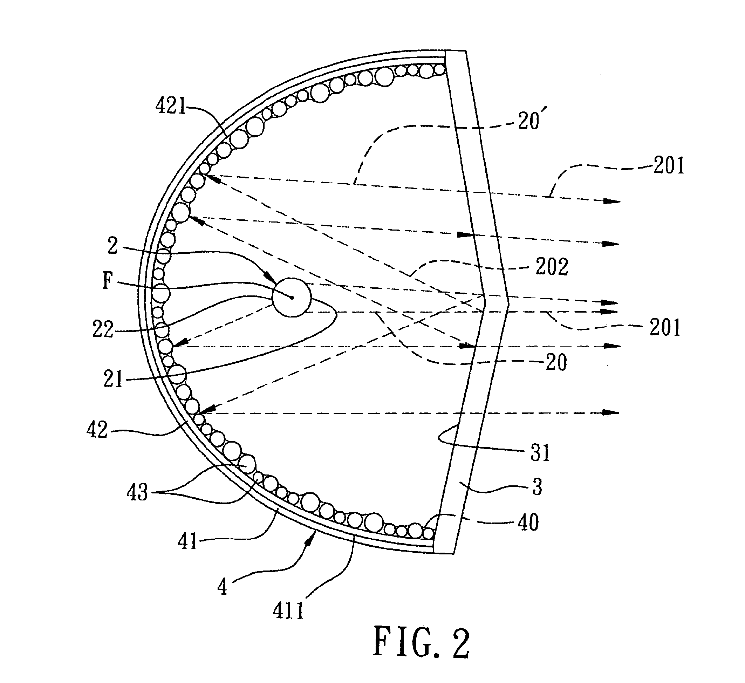

Referring to Figs. 2 to 4, a linearly polarized light converter according to the preferred embodiment of the present invention uses a polarization recycling mechanism for separating a first linearly polarized wave 201 of an unpolarized wave 20 that includes the first linearly polarized wave 201 and a second linearly polarized wave 202 orthogonal with the first linearly polarized wave 201, and that is produced by a light source 2. The linearly polarized light converter of the present invention comprises a polarized beam splitter 3 disposed on a first side 21 of the light source 2, and a metallic reflector 4 disposed on a second side 22 of the light source 2 that is opposite to the first side 21.

It is worth mentioning that when the first linearly polarized wave 201 of the present invention is a transverse magnetic wave (TM wave), the second linearly polarized wave 202 is a transverse electric wave (TE wave) . However, when the first linearly polarized wave 201 is a TE wave, the second linearly polarized wave 202 is a TM wave. This is due to the fact that the TE wave and the TM wave are two linearly polarized waves that are orthogonal to each other, and any light wave can be decomposed into two linearly polarized waves that are orthogonal to each other. In the preferred embodiment of this invention, the first linearly polarized wave 201 is a TM wave, and the second linearly polarized wave 202 is a TE wave. A monochromatic or chromatic light bulb, a cold-cathode fluorescent lamp (CCFL), or a light emitting diode (LED) may be suitably used as the light source 2 in this invention.

The polarized beam splitter 3 is adapted to receive the unpolarized wave 20, transmit the first linearly polarized wave (i.e., the TM wave) 201 therethrough, and reflect the second linearly polarized wave (i.e., the TE wave) 202.

A broadband wide-angle polarization beam splitter, a prism, a multi-layered film, a dielectric grating, a linear grating structure, or any combination thereof may be suitably used as the polarized beam splitter 3 of this invention. Preferably, the polarized beam splitter 3 has a surface 31 facing the light source 2. The surface 31 of the polarized beam splitter 3 has a cross section that is parabolic, spherical, conical, rectangular, square, polyhedral conical, or any combination thereof.

Preferably, the polarized beam splitter 3 and the metallic reflector 4 provided respectively on the first and second sides 21, 22 of the light source 2 are adapted to encompass the light source 2. More preferably, the metallic reflector 4 includes a substrate 41 having a surface 411, a metal layer 42 formed on the surface 411 of the substrate 41, and a plurality of metal particles 43 distributed over the metal layer 42. Each of the metal particles 43 is made of gold (Au), silver (Ag), copper (Cu), aluminum (A1), or an alloy thereof. The surface 411 of the substrate 41 has at least one focal point (F), and is parabolic, spherical, conical, rectangular, square, polyhedral conical, or any combination thereof.

Citing an example, when the surface 411 of the substrate 41 of the metallic reflector 4 is made up of (n) number of interconnected parabolic surfaces, the surface 411 has (n) number of focal points (F), and can selectively cooperate with (n) number of light sources 2 that are proximate to the aforesaid (n) number of focal points (F) . In the preferred embodiment of this invention, the light source 2 is a light emitting diode that is disposed at or near the focal point (F) of the surface 411 of the substrate 41. Each of the metal particles 43 has a shape of a spheroid, a trigonal pyramid, a tetragonal pyramid, an ellipsoid, a polyhedral cone, or any combination thereof. In this embodiment, each metal particle 43 is a spheroid. The wavelength of the unpolarized wave 20 is in the visible spectrum (ranging between 400nm~700nm), and is defined as $\lambda$.

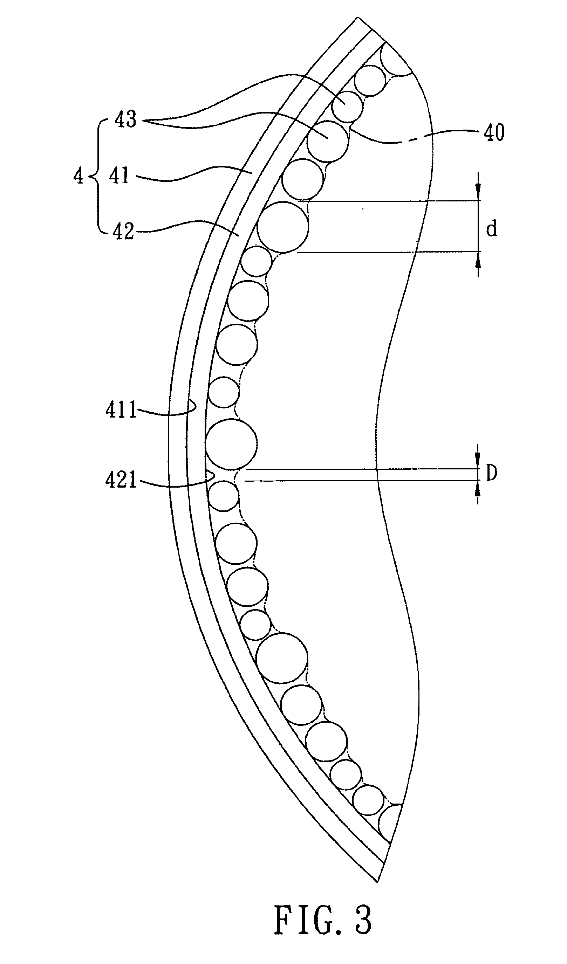

With reference to Fig. 3, more preferably, each metal particle 43 has a granular diameter (d) ranging from 0,1$\lambda$ to 100$\lambda$, and the distance (D) between each two adjacent ones of the metal particles 43 ranges from 0.1$\lambda$~100$\lambda$. It is worth mentioning that the metal particles 43 are formed on a surface 421 of the metal layer 42 by a spraying process. In this embodiment, the metal particles 43 of the metallic reflector 4 cooperatively define a rough surface 40. Referring back to Fig. 2, it is apparent that the rough surface 40 is used for receiving the reflected second linearly polarized wave 202 so as to convert the same into an elliptical polarized wave 20' and for reflecting the elliptical polarized wave 20' .

In the preferred embodiment of this invention, when, for example, the granular diameter (d) of each metal particle 43 is 0.0022mm, and the distance (D) between two adjacent ones of the metal particles 43 is 0.005mm, the average polarization conversion efficiency of the rough surface 40 can be calculated to be 0.65. Hence, the power efficiency of a single reflection is obtained to be about 82.5%, that is,

$$\text{Power efficiency} = \left[\frac{0.5 + (0.5 \times 0.65)}{1}\right] \times 100\% = 82.5\%$$

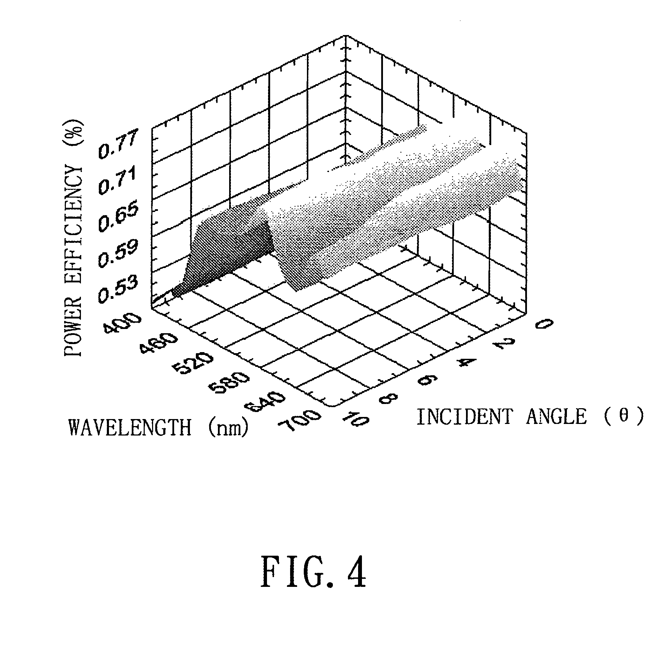

Fig. 4 is a 3D chart of the preferred embodiment, illustrating the power efficiencies (%) of the polarization converter of the present invention at different wavelengths ($\lambda$) and incident angles ($\theta$).

The present invention uses the rough surface 40 cooperatively defined by the metal particles 43 to replace the conventional metallic diffraction grating 11 (see Fig. 1) so as to minimize the time and equipment costs associated with the photolithography and etching steps in producing the conventional metallic diffraction grating 11. Further, because of the rough surface 40 defined by the metal particles 43 of the metallic reflector 4 of the linearly polarized light converter of the present invention, the polarization efficiency of the linearly polarized light converter is not affected by the azimuth of the electromagnetic wave relative to an incident plane (that is, it is not limited by the cylindrical electromagnetic wave). Hence, the linearly polarized light converter of the present invention is suitable for use with a spherically shaped electromagnetic wave light source (for example, an LED backlight light source), and may be suitably applied to a micro-liquid-crystal projector.

In summary, the linearly polarized light converter of the present invention can provide linearly polarized light with minimal consumption of energy while requiring minimal production costs, and can allow for an increase in the selection of light sources to be used therewith. Hence, the object of the present invention is satisfied.

## Claims

1.  A linearly polarized light converter using a polarization recycling mechanism for separating a first linearly polar-ized wave (201) of an unpolarized wave (20) that includes the first linearly polarized wave (201) and a second linearly polarized wave (202) orthogonal with the first linearly polarized wave (201), said linearly polarized light converter comprising:

    a light source (2) arranged to produce the unpolarized wave (20); and
    a polarized beam splitter (3) disposed on a first side (21) of the light source (2) for receiving the unpolarized wave (20), transmitting the first linearly polarized wave (201) therethrough, and reflecting the second linearly polarized wave (202);
    **characterized by**
    a metallic reflector (4) disposed on a second side (22) of the light source (2) that is opposite to the first side (21), wherein said metallic reflector includes a metal layer (42) and a plurality of metal particles (43) formed on a surface (421) of said metal layer (42) and distributed over said metal layer (42) to cooperatively define a rough surface (40), said rough surface (40) converting the reflected second linearly polarized wave (202) into an elliptical polarized wave (20') and reflecting the elliptical polarized wave (20') therefrom.

2.  The linearly polarized light converter of Claim 1, **characterized in that** each of said metal particles (43) has a shape of a spheroid, a trigonal pyramid, a tetragonal pyramid, an ellipsoid, a polyhedral cone, or any combination thereof.

3.  The linearly polarized light converter of Claim 1, **characterized in that** each of said metal particles (43) is made of gold, silver, copper, aluminum, or an alloy thereof.

4.  The linearly polarized light converter of Claim 1, **characterized in that**, when a wavelength of the unpolarized wave (20) is defined as $\lambda$, each of said metal particles (43) has a diameter ranging from $0.1\lambda$ to $100\lambda$, and each two adjacent ones of said metal particles (43) is spaced apart from each other at a distance ranging from $0.1\lambda$ to $100\lambda$.

5.  The linearly polarized light converter of Claim 4, **characterized in that** the wavelength of the unpolarized wave (20) is in the visible spectrum.

6.  The linearly polarized light converter of Claim 1, **characterized in that** said polarization beam splitter (3) is a broadband wide-angle polarization beam splitter.

7.  The linearly polarized light converter of Claim 1, **characterized in that** said polarization beam splitter (3) is a prism, a multi-layered film, a dielectric grating, a linear grating structure, or any combination thereof.

8. The linearly polarized light converter of Claim 1, **characterized in that** said polarization beam splitter (3) has a surface facing the light source (2) and having a cross section that is parabolic, spherical, conical, rectangular, square, polyhedral conical, or any combination thereof.

9. The linearly polarized light converter of Claim 1, **characterized in that** said light source (2) is a light bulb or a light emitting diode.

10. The linearly polarized light converter of Claim 1, **characterized in that** said polarization beam splitter (3) and said metallic reflector (4) are adapted to encompass the light source (2).

11. The linearly polarized light converter of Claim 10, **characterized in that** said metallic reflector (4) further includes a substrate (41) having a surface (411), said metal layer (42) being formed on said surface (411) of said substrate (41), said surface (411) of said substrate (41) having at least one focal point (F), the light source (2) being disposed at or near the focal point (F).

12. The linearly polarized light converter of Claim 11, **characterized in that** said surface (411) of said substrate (41) is parabolic, spherical, rectangular, square, polyhedral conical, or any combination thereof.

**Patentansprüche**

1. Ein Wandler für linear polarisiertes Licht, der einen Polarisationsrückführungsme-chanismus verwendet, zum Separieren einer ersten linear polarisierten Welle (201) einer unpolarisierten Welle (20), die die erste linear polarisierte Welle (201) und eine zweite linear polarisierte Welle (202) umfasst, die orthogonal zu der ersten linear polarisierten Welle (201) ist, wobei der Wandler für linear polarisiertes Licht folgende Merkmale aufweist:

eine Lichtquelle (2), die angeordnet ist, um die unpolarisierte Welle (20) zu erzeu-gen; und
einen polarisierten Strahlteiler (3), der auf einer ersten Seite (21) der Lichtquelle (2) angeordnet ist, zum Empfangen der unpolarisierten Welle (20), Durchlassen der ersten linear polarisierten Welle (201) durch denselben und Reflektieren der zweiten linear polarisierten Welle (202);
**gekennzeichnet durch**
einen Metallreflektor (4), der auf einer zweiten Seite (22) der Lichtquelle (2) ange-ordnet ist, die gegenüber von der ersten Seite (21) ist,
wobei der Metallreflektor eine Metallschicht (42) und eine Mehrzahl von Metallteil-chen (43) umfasst, die auf einer Oberfläche (421) der Metallschicht (42) gebildet und über der Metallschicht (42) verteilt sind, um zusammenwirkend eine raue Oberfläche (40) zu definieren, wobei die raue Oberfläche (40) die reflektierte zweite linear polarisierte Welle (202) in eine elliptische polarisierte Welle (20') wandelt und die elliptische polarisierte Welle (20') von derselben reflektiert.

2. Der Wandler für linear polarisiertes Licht gemäß Anspruch 1, dadurch gekennzeich-net, dass jedes der Metallteilchen (43) eine Form eines Sphäroids, einer trigonalen Pyramide, einer tetragonalen Pyramide, eines Ellipsoids, eines polyedrischen Kegels oder einer beliebigen Kombination derselben aufweist.

3. Der Wandler für linear polarisiertes Licht gemäß Anspruch 1, dadurch gekennzeich-net, dass jedes der Metallteilchen (43) aus Gold, Silber, Kupfer, Aluminium oder einer Legierung derselben hergestellt ist.

4. Der Wandler für linear polarisiertes Licht gemäß Anspruch 1, dadurch gekennzeich-net, dass, wenn eine Wellenlänge der unpolarisierten Welle (20) als $\lambda$ definiert ist, jedes der Metallteilchen (43) einen Durchmesser aufweist, der von 0,1 $\lambda$ bis 100 $\lambda$ variiert, und jeweils zwei benachbarte der Metallteilchen (43) in einer Entfernung voneinander beabstandet sind, die von 0,1 $\lambda$ bis 100 $\lambda$ variiert.

5. Der Wandler für linear polarisiertes Licht gemäß Anspruch 4, dadurch gekennzeich-net, dass die Wellenlänge der unpolarisierten Welle (20) in dem sichtbaren Spektrum liegt.

6. Der Wandler für linear polarisiertes Licht gemäß Anspruch 1, dadurch gekennzeich-net, dass der Polarisations-strahlteiler (3) ein Breitband-Weitwinkel-Polarisations-strahlteiler ist.

7. Der Wandler für linear polarisiertes Licht gemäß Anspruch 1, dadurch gekennzeich-net, dass der Polarisations-

strahlteiler (3) ein Prisma, ein mehrschichtiger Film, ein dielektrisches Gitter, eine lineare Gitterstruktur oder eine beliebige Kombination derselben ist.

8. Der Wandler für linear polarisiertes Licht gemäß Anspruch 1, dadurch gekennzeich-net, dass der Polarisations-strahlteiler (3) eine Oberfläche aufweist, die der Lichtquelle (2) zugewandt ist und einen Querschnitt aufweist, der parabolisch, sphärisch, konisch, rechteckig, quadratisch, polyedrisch-konisch oder eine beliebige Kombination derselben ist.

9. Der Wandler für linear polarisiertes Licht gemäß Anspruch 1, dadurch gekennzeich-net, dass die Lichtquelle (2) eine Glühlampe oder eine Leuchtdiode ist.

10. Der Wandler für linear polarisiertes Licht gemäß Anspruch 1, dadurch gekennzeich-net, dass der Polarisations-strahlteiler (3) und der Metallreflektor (4) angepasst sind, um die Lichtquelle (2) zu beinhalten.

11. Der Wandler für linear polarisiertes Licht gemäß Anspruch 10, dadurch gekenn-zeichnet, dass der Metallreflektor (4) ferner ein Substrat (41) mit einer Oberfläche (411) aufweist, wobei die Metallschicht (42) auf der Oberfläche (411) des Substrats (41) gebildet ist, wobei die Oberfläche (411) des Substrats (41) zumindest einen Brennpunkt (F) aufweist, und wobei die Lichtquelle (2) an oder nahe dem Brennpunkt (F) angeordnet ist.

12. Der Wandler für linear polarisiertes Licht gemäß Anspruch 11, dadurch gekenn-zeichnet, dass die Oberfläche (411) des Substrats (41) parabolisch, sphärisch, rechteckig, quadratisch, polyedrisch-konisch oder eine beliebige Kombination derselben ist.


**Revendications**

1. Convertisseur de lumière polarisée linéairement à l'aide d'un mécanisme de recyclage de polarisation pour séparer une première onde polarisée linéairement (201) d'une onde non polarisée (20) qui comporte la première onde polarisée linéairement (201) et une deuxième onde polarisée linéairement (202) orthogonale à la première onde polarisée linéairement (201), ledit convertisseur de lumière polarisée linéairement comprenant:

   une source de lumière (2) aménagée pour produire l'onde non polarisée (20); et
   un diviseur de faisceau polarisé (3) disposé d'un premier côté (21) de la source de lumière (2) pour recevoir l'onde non polarisée (20),
   transmettant la première onde polarisée linéairement (201) à travers ce dernier et réfléchissant la deuxième onde polarisée linéairement (202);
   **caractérisé par**
   un réflecteur métallique (4) disposé d'un deuxième côté (22) de la source de lumière (2) qui est opposé au premier côté (21),
   dans lequel ledit réflecteur métallique comporte une couche métallique (42) et une pluralité de particules de métal (43) formées sur une surface (421) de ladite couche métallique (42) et réparties sur ladite couche métallique (42) de manière à définir, en coopération, une surface rugueuse (40), ladite surface rugueuse (40) convertissant la deuxième onde polarisée linéairement (202) réfléchie en une onde polarisée elliptique (20') et réfléchissant l'onde polarisée elliptique (20') à partir de cette dernière.

2. Convertisseur de lumière polarisée linéairement selon la revendication 1, **caractérisé par le fait que** chacune desdites particules de métal (43) présente une forme de sphéroïde, de pyramide trigonale, de pyramide tétragonale, d'ellipsoïde, de cône polyèdre ou de toute combinaison de ces dernières.

3. Convertisseur de lumière polarisée linéairement selon la revendication 1, **caractérisé par le fait que** chacune desdites particules de métal (43) est réalisée en or, argent, cuivre, aluminium, ou un alliage de ceux-ci.

4. Convertisseur de lumière polarisée linéairement selon la revendication 1, **caractérisé par le fait que**, lorsqu'une longueur d'onde de l'onde non polarisée (20) est définie comme étant $\lambda$, chacune desdites particules de métal (43) a un diamètre allant de 0,1 $\lambda$ à 100 $\lambda$, et chaque fois deux adjacentes desdites particules de métal (43) sont espacées l'une de l'autre d'une distance allant de 0,1 $\lambda$ à 100 $\lambda$.

5. Convertisseur de lumière polarisée linéairement selon la revendication 4, **caractérisé par le fait que** la longueur d'onde de l'onde non polarisée (20) se situe dans le spectre visible.

6. Convertisseur, de lumière polarisée linéairement selon la revendication 1, **caractérisé par le fait que** ledit diviseur de faisceau de polarisation (3) est un diviseur de faisceau de polarisation à angle large à bande large.

7. Convertisseur de lumière polarisée linéairement selon la revendication 1, **caractérisé par le fait que** ledit diviseur de faisceau de polarisation (3) est un prisme, un film multicouche, une grille diélectrique, une structure de grille linéaire, ou toute combinaison de ces derniers.

8. Convertisseur de lumière polarisée linéairement selon la revendication 1, **caractérisé par le fait que** ledit diviseur de faisceau de polarisation (3) présente une surface faisant face à la source de lumière (2) et ayant une section qui est parabolique, sphérique, conique, rectangulaire, carrée, conique polyèdre, ou de toute combinaison de ces dernières.

9. Convertisseur de lumière polarisée linéairement selon la revendication 1, **caractérisé par le fait que** ladite source de lumière (2) est une ampoule lumineuse ou une diode électroluminescente.

10. Convertisseur de lumière polarisée linéairement selon la revendication 1, **caractérisé par le fait que** ledit diviseur de faisceau de polarisation (3) et ledit réflecteur métallique (4) sont adaptés pour englober la source de lumière (2).

11. Convertisseur de lumière polarisée linéairement selon la revendication 10, **caractérisé par le fait que** ledit réflecteur métallique (4) comporte par ailleurs un substrat (41) présentant une surface (411), ladite couche métallique (42) étant formée sur ladite surface (411) dudit substrat (41), ladite surface (411) dudit substrat (41) présentant au moins un point focal (F), la source de lumière (2) étant disposée au ou près du point focal (F).

12. Convertisseur de lumière polarisée linéairement selon la revendication 11, **caractérisé par le fait que** ladite surface (411) dudit substrat (41) est parabolique, sphérique, conique, rectangulaire, carrée, conique polyèdre, ou de toute combinaison de ces dernières.

FIG. 1 PRIOR ART

EP 2 367 047 B1

FIG. 2

EP 2 367 047 B1

FIG. 3

10

FIG. 4

EP 2 367 047 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20090040608 A1